# FASCICULE DE BREVET EUROPEEN

(11) **EP 3 086 195 B1**
(45) Date de publication et mention de la délivrance du brevet: **20.02.2019**
(21) Numéro de dépôt: 16165089.0
(22) Date de dépôt: 13.04.2016
(51) Int. Cl.: G05D 1/00, G05D 1/10, H04L 29/08, G06T 19/00, G09G 5/12, G02B 27/01

(54) **SYSTÈME DE PILOTAGE DE DRONE EN IMMERSION**
SYSTEM ZUM STEUERN EINER DROHNE IM IMMERSIONMODUS
SYSTEM FOR PILOTING A DRONE IN FIRST-PERSON VIEW MODE

(30) Priorité: 23.04.2015 FR 1553656
(43) Date de publication de la demande: 26.10.2016
(73) Titulaire: Parrot Drones, 75010 Paris (FR)
(72) Inventeur: SEYDOUX, Henri, 75017 Paris (FR); FERRAND, Arsène, 75019 Paris (FR); BRULEZ, Nicolas, 77400 Pomponne (FR)
(74) Mandataire: Dupuis-Latour, Dominique

(56) Documents cités:
- EP-A1- 2 131 443
- EP-A2- 2 557 468
- WO-A2-99/05580

## Description

L'invention concerne les drones à voilure tournante tels que les quadricoptères et analogues.

Ces drones sont pourvus de rotors multiples entrainés par des moteurs respectifs commandables de manière différenciée afin de piloter le drone en attitude et en vitesse.

L'*AR.Drone 2.0* ou le *Bebop Drone* de Parrot SA, Paris, France sont des exemples typiques de tels quadricoptères. Ils sont équipés d'une série de capteurs (accéléromètres, gyromètres trois axes, altimètre), d'une caméra frontale captant une image de la scène vers laquelle est dirigé le drone, et d'une caméra de visée verticale captant une image du terrain survolé. Les WO 2010/061099 A2 et EP 2 364 757 A1 (Parrot SA) décrivent un tel drone ainsi que son principe de pilotage par l'intermédiaire d'un téléphone ou baladeur multimédia à écran tactile et accéléromètre intégré, par exemple un téléphone cellulaire de type *iPhone* ou une tablette multimédia de type *iPad* (marques déposées de Apple Inc., USA). Ces appareils incorporent les divers organes de contrôle nécessaires à la détection des commandes de pilotage et à l'échange bidirectionnel de données avec le drone via une liaison sans fil de type réseau local *Wi-Fi* (IEEE 802.11) ou *Bluetooth* (marques déposées). Ils sont en outre pourvus d'un écran tactile affichant l'image captée par la caméra frontale du drone, avec en superposition un certain nombre de symboles permettant l'activation de commandes par simple contact du doigt de l'utilisateur sur cet écran tactile.

La caméra video frontale du drone est utilisable pour un pilotage en "mode immersif" ou FPV (*First-Person View*), c'est-à-dire où l'utilisateur se sert de l'image de la caméra de la même façon que s'il se trouvait lui-même à bord du drone. Elle peut également servir à capter des séquences d'images d'une scène vers laquelle se dirige le drone. L'utilisateur peut ainsi se servir du drone de la même façon que d'une caméra ou d'un caméscope qui, au lieu d'être tenu à la main, serait porté par le drone. Les images recueillies peuvent être enregistrées, diffusées, mises en ligne sur des sites web d'hébergement de séquences video, envoyées à d'autres internautes, partagées sur des réseaux sociaux, etc.

Dans le système *Bebop Drone* commercialisé par la demanderesse, le pilote visualise directement l'image prise par le drone sur une station au sol commercialisée sous le nom *Skycontroller*, et il peut contrôler l'angle de vue de la caméra à l'aide de l'interface tactile de la tablette de type *iPad* équipant la station au sol. Cette commande d'angle de vue agit sur un traitement numérique de recadrage et de correction de distorsion appliquée sur l'image prise par la caméra, de type "fish-eye", de manière simuler un mouvement physique de l'axe de la caméra vers la gauche, la droite, le haut et le bas.

Par ailleurs, la station au sol dispose d'une sortie video pour la connexion de lunettes FPV pour un pilotage en mode immersif.

Ce mode immersif donne des sensations incomparables au pilote, qui peut orienter l'image reproduite dans les lunettes à gauche et à droite, et en haut et en bas, par rapport au cap du drone. Mais en même temps il lui fait perdre le contact visuel avec la réalité qui l'entoure au sol. Or un drone du type précité nécessite, pour maintenir la qualité de la liaison sans fil entre la station au sol et le drone, de maintenir l'antenne de la station au sol orientée au moins approximativement dans la direction du drone, ce qui est impossible à réaliser dans un tel mode immersif.

La présente invention vise, dans un système comportant un drone, une station au sol de pilotage et des lunettes de type FPV, à permettre au pilote de s'assurer que la station au sol est orientée dans une direction qui préserve ou qui optimise la liaison sans fil entre la station au sol et le drone.

Le WO 99/05580 A2 décrit un équipement de pilotage à distance d'un drone dans lequel un opérateur porte un casque muni d'une visière avec un afficheur restituant des images transmises à partir du drone, ainsi que des indications visuelles d'aide au pilotage.

Le EP 2 131 443 A1 décrit un équipement de pilotage à distance d'un drone au moyen d'un installation multi-antennes, par exemple montée sur un véhicule de commandement. Un afficheur indique à un opérateur celle des antennes qui est active, avec le niveau du signal reçu, de manière à permettre éventuellement une resélection, manuelle ou automatique, d'une antenne mieux orientée, à partir d'un calcul de la direction et de la distance du drone par rapport à la station au sol.

Mais aucun des ces deux documents précités ne suggère de moyen visuel pour aider un utilisateur coupé de l'environnement réel extérieur, qui tient en main une console de pilotage, à maintenir l'antenne de cette console orientée au moins approximativement dans la direction du drone pour maintenir la qualité de la liaison sans fil avec ce dernier, en particulier pour lui indiquer dans quel sens (vers la droite ou vers la gauche, etc.) se déplacer avec sa console (typiquement en tournant sur lui-même) pour que l'antenne directionnelle pointe convenablement vers le drone, et/ou l'avertir d'une situation où la position du drone est telle que la liaison sans fil est susceptible d'être de mauvaise qualité, voire perdue.

Pour résoudre ce problème, l'invention propose un système de pilotage de drone en immersion comprenant, de manière en elle-même connue d'après le WO 99/05580 A2 précité, un drone doté de moyens de prise de vue et une station au sol communiquant avec le drone par une liaison sans fil. La station au sol comprend une console pourvue d'une antenne directionnelle apte à être dirigée en direction du drone pour maintenir la qualité de la liaison sans fil, et des lunettes de réalité virtuelle restituant des images prises à l'aide des moyens de prise de vue et transmises à partir du drone par la liaison sans fil, ainsi que des indications visuelles incluses dans les images restituées.

De façon caractéristique de l'invention, le système comprend en outre des moyens de détermination d'une coordonnée angulaire définie entre une direction de cap de la console et un direction du drone, et des moyens sensibles à ces moyens de détermination, pour inclure dans lesdites indications visuelles une indication de désalignement du drone par rapport au cap de la console, cette indication de désalignement étant fonction de ladite coordonnée angulaire déterminée, de façon à permettre à un utilisateur de la console d'effectuer une action correctrice de réorientation de la console dans le sens d'une réduction de ladite coordonnée angulaire).

Le système comprend également, facultativement, les caractéristiques avantageuses suivantes, prises individuellement ou en toutes combinaisons que l'homme du métier reconnaitra comme techniquement compatibles :
- les moyens de détermination de position comprennent un magnétomètre pour déterminer le cap de la console ;
- les moyens de détermination de position comprennent des modules de positionnement GPS prévus dans le drone et dans la station au sol, et des moyens de traitement pour déterminer une orientation du drone, correspondant à une droite passant par le drone et par la console, par rapport à une direction du nord ;
- les moyens de détermination de ladite coordonnée angulaire comprennent un moyen de soustraction de l'angle du cap de la console et de l'angle correspondant à ladite orientation du drone ;
- les moyens de détermination de position comprennent un moyen pour comparer la position angulaire du drone relativement à un cap de la console avec un gabarit angulaire correspondant à un secteur angulaire, centré sur ledit cap, hors duquel ladite liaison sans fil est susceptible d'être de mauvaise qualité, ou perdue ;
- dans ce dernier cas, si la liaison sans fil est apte à opérer dans un parmi au moins deux modes correspondant à des directivités différentes de l'antenne, il est également prévu des moyens de sélection d'un gabarit angulaire de bonne réception en fonction du mode actif de la liaison sans fil ;
- le système comprend en outre des moyens sensibles au niveau du signal de la liaison sans fil reçu du drone pour sélectivement inclure ou non ladite indication visuelle ;
- dans ce dernier cas, ladite indication visuelle est avantageusement incluse dans le cas où la position angulaire du drone est comprise dans le gabarit angulaire mais le niveau du signal est inférieur à un seuil prédéterminé, et n'est pas incluse dans le cas où la position angulaire du drone n'est pas comprise dans le gabarit angulaire mais le niveau du signal est supérieur à un seuil prédéterminé ;
- ladite indication visuelle comprend une signalisation visuelle de la position relative de la console et du drone, avec un secteur de cercle représentatif d'un gabarit angulaire de bonne réception, et un pictogramme dont la position est représentative de la position angulaire du drone par rapport au gabarit ;
- dans ce dernier cas, ladite indication visuelle comprend avantageusement un ensemble de flèches directionnelles pouvant être chacune sélectivement affichées pour indiquer un sens de déplacement souhaité pour la console afin d'amener le cap de la console vers la direction du drone, lesdites flèches directionnelles comprenant des flèches vers la gauche et vers la droite et/ou vers le haut et vers le bas.

On va maintenant décrire un exemple de réalisation d'un système de transmission d'images entre un drone et une station au sol drone selon l'invention, en référence aux dessins annexés où les mêmes références désignent d'une figure à l'autre des éléments identiques ou fonctionnellement semblables.
La Figure 1 illustre schématiquement un ensemble de drone et de station au sol du commerce, auquel s'applique avantageusement l'invention.
La Figure 2 illustre la station au sol de la Figure 1 complétée par des lunettes de pilotage en mode immersif.
La Figure 3 illustre en vue en plan des caractéristiques géométriques reflétant la position mutuelle d'une console de la station au sol et du drone.
La Figure 4 est un logigramme des fonctions essentielles réalisées par le système de l'invention.
La Figure 5 montre un exemple d'indication visuelle superposée aux images restituées par les lunettes.

On va maintenant décrire un exemple de réalisation du dispositif de l'invention.

Un système de prise de vue en immersion (*First Person View*) selon la présente invention comprend un drone équipé d'au moins une caméra de prise de vue, une station au sol communiquant par une liaison sans fil de portée appropriée avec le drone et des lunettes de réalité virtuelle, dotées de moyens de restitution devant les yeux de l'utilisateur d'images lui donnant la sensation de voler à bord du drone, de la façon la plus réaliste possible (vol dit en *First Person View* ou FPV).

Dans cet exemple, le drone comprend une caméra unique avec optique de type *fisheye,* mais pourrait en variante comporter un ensemble de caméras, et des moyens de traitement numérique embarqués et/ou prévus dans la station au sol permettant de combiner les images des diverses caméras.

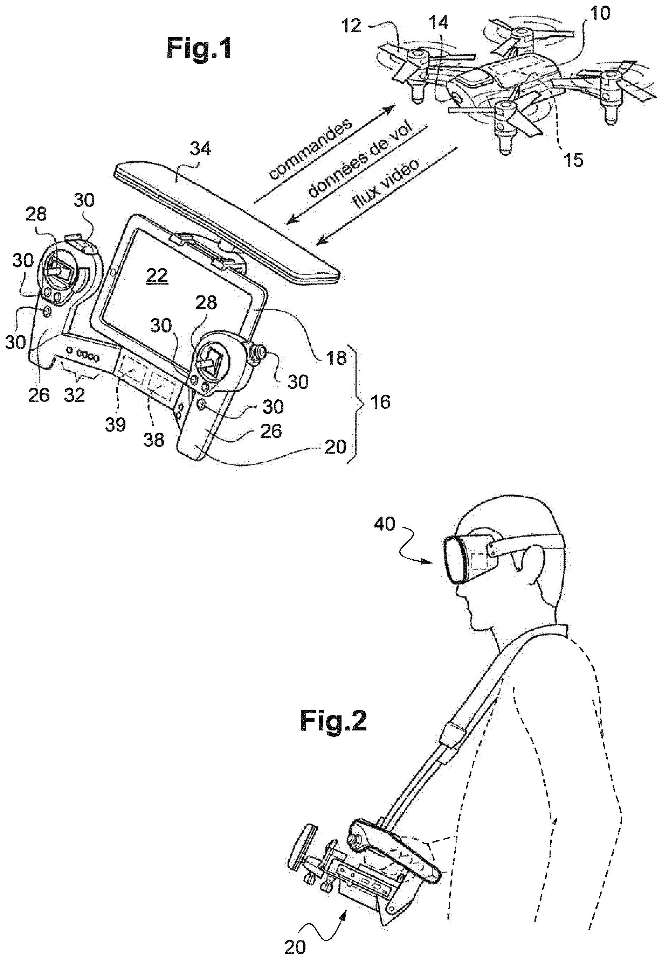

Sur la Figure 1, la référence 10 désigne de façon générale le drone, par exemple un drone volant de type quadricoptère tel que le modèle *Bebop* de Parrot SA, Paris, France. Ce drone comporte quatre rotors coplanaires 12 dont les moteurs sont pilotés indépendamment par un système intégré de navigation et de contrôle d'attitude. Le drone comporte également une caméra 14 à visée frontale permettant d'obtenir une image video de la scène vers laquelle se dirige le drone, par exemple une caméra haute définition à capteur CMOS de résolution 1920 x 1080 pixels avec une fréquence de rafraichissement du flux video de 30 fps (images par seconde), associée à un objectif grand-angle de type *fisheye.*

Le drone possède également des moyens de traitement et de correction d'image aptes à recadrer en temps réel ou quasi-réel les images prises par le drone en fonction d'une direction dans laquelle le pilote souhaite porter son regard, comme on va le voir dans la suite.

Le drone 10 comprend également un module GPS 15 (non visible) apte à traiter et à délivrer à la station au sol, de façon systématique ou sur commande, ses coordonnées GPS relevées à intervalles réguliers.

Le drone est piloté par une station au sol 16 comprenant une console de télécommande 20 associée à une tablette 18.

La tablette 18 est une tablette conventionnelle, par exemple de type *iPad* (marque déposée) ou analogue, comprenant un écran de visualisation 22, dans laquelle a été chargé un module logiciel applicatif de pilotage du drone 10 et de visualisation des images prises par la caméra embarquée 14. La tablette 18 est par ailleurs équipée d'une interface radio d'échange de données, par exemple de type *Wi-Fi.* Il s'agit d'une tablette d'un modèle standard, non modifié si ce n'est le chargement du module logiciel applicatif.

L'écran 22 de la tablette 18 affiche l'image de la scène captée par la caméra embarquée 14 du drone, avec en superposition un certain nombre de symboles permettant le contrôle de divers paramètres de navigation. Cet écran est un écran tactile permettant l'activation de commandes de pilotage par simple contact d'un doigt d'un opérateur sur les symboles affichés à l'écran (montée/descente, contrôle d'attitude, etc.). Ces actions sont interprétées par le logiciel applicatif qui les transforme en signaux de commande à destination du drone, envoyés sur l'interface *Wi-Fi* d'échange de données. Inversement, les données de vol en provenance du drone 10 reçues par l'interface *Wi-Fi* sont délivrées au logiciel applicatif pour y être traitées et faire éventuellement l'objet d'un affichage sur l'écran 22 de la tablette.

La production de commandes à partir de l'écran tactile de la tablette n'est ici qu'optionnelle, les différentes commandes étant dupliquées et complétées par des actions sur divers boutons et manettes de la console 20. Plus précisément, la console 20 comporte un support 24 permettant de solidariser la tablette 18 à la console, face à l'opérateur de manière à ce que celui-ci puisse voir la totalité de la surface de l'écran 22. Le corps de la console 20 est prolongé de chaque côté par des poignées 26 pourvues de divers organes de commande tels que des manettes 28 de type "manche à balai" et des boutons 30 disposés à portée des doigts de l'opérateur et associés chacun à une commande particulière (décollage/atterrissage, retour au point de départ, déclenchement de l'enregistrement de la scène captée par la caméra, etc.). La console 20 est également munie de divers afficheurs lumineux 32 (niveau de la batterie du drone, enregistrement en cours, force du signal sans fil reçu du drone, etc.), ainsi que d'une connectique (non représentée) permettant le branchement d'accessoires parmi lesquels des lunettes de réalité virtuelle à écran intégré utilisables en alternative à l'écran de visualisation 22 de la tablette. En variante, les accessoires peuvent communiquer avec la console par une communication sans fil.

La console 20 est également munie d'une antenne *Wi-Fi* 34 directionnelle à longue portée, que l'opérateur dirige vers le drone 10 lorsqu'il a entre ses mains la console de télécommande 20. Cette liaison *Wi-Fi* véhicule notamment vers le drone les commandes de pilotage à destination du drone 10, les données de composantes angulaires de la direction dans laquelle le pilote en immersion souhaite regarder la scène prise par la caméra 14 (comme on va le décrire dans la suite), et depuis le drone le signal video issu de la caméra, recadrée ici dans le drone par les moyens de traitement susmentionnés. Dans une forme de réalisation préférée, la liaison sans fil est susceptible d'opérer dans deux bandes de fréquences, par exemple 2,4 et 5,2 GHz, avec des caractéristiques de transmission et de directivité différentes.

La console 20 est également équipée d'un magnétomètre, de préférence un magnétomètre 3 axes, permettant de déterminer son cap par rapport au nord magnétique. Avantageusement, ce magnétomètre fait partie d'une centrale inertielle 38, comprenant de préférence un accéléromètre 3 axes, un gyromètre 3 axes et le magnétomètre précité.

La console comprend en outre un module GPS 39 capable de délivrer ses propres coordonnées GPS, notamment à des fins telles qu'expliquées dans la suite.

En référence à la Figure 2, on a représenté la console 20 ainsi que des lunettes de réalité virtuelle 40 reliées à la console par une liaison filaire ou sans fil comme décrit ci-dessus, constituant un canal de communication bidirectionnelle.

Par exemple, les lunettes sont du type *Oculus Rift* (marque déposée) commercialisées par la société Oculus, Menlo Park, Californie, USA, connectées à la console 20 par une liaison HDMI et/ou USB, ou encore des lunettes de type *Zeiss VR One* (marque déposée), ces dernières incorporant un téléphone portable remplaçant la tablette 18 et la liaison avec la console 20 étant alors une liaison sans fil.

La console 20 est apte à communiquer dans une direction montante avec les lunettes 40 pour quelles affichent une image video. Dans une forme de réalisation la plus simple, cette image est une recopie de l'image affichée sur l'écran de visualisation 22 de la tablette.

Le principe général de l'invention consiste à signaler au pilote, d'une manière quelconque mais de préférence au niveau de l'affichage des lunettes, une indication du bon alignement ou du mauvais alignement de la console, et donc de son antenne directionnelle, par rapport au drone.

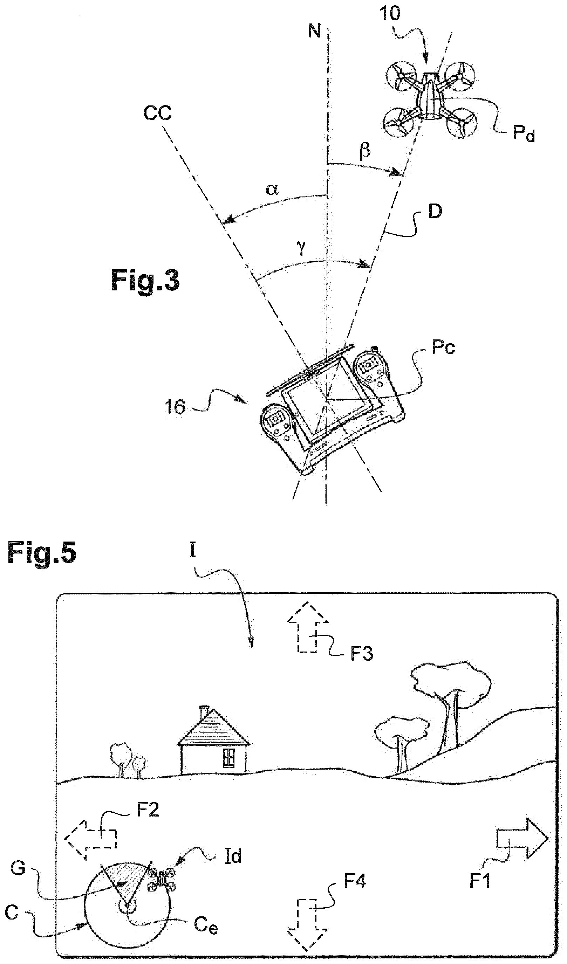

En référence à la Figure 3, on a illustré le drone 10 et la station au sol 16 constituée de la console 20 munie de la tablette 18. Sur cette figure, par souci de simplification on considère en première approximation que le nord magnétique (la référence pour les magnétomètres) et le nord géographique (celui des coordonnées GPS) sont confondus, le nord étant indiqué en N.

La droite CC désigne le cap de la console 20, et l'angle α désigne l'angle formé par le cap de la console par rapport au nord (valeur positive par rapport au sens trigonométrique). Le terme de "cap" sera entendu dans son sens courant notamment dans le domaine de la navigation, à savoir la direction de l'avant, vers laquelle est orienté (ou pointe) un mobile. Le cap peut être quantifié par l'angle entre l'axe principal de ce mobile et la direction du nord (géographique ou magnétique). Dans le cas présent, le cap est la direction vers laquelle pointe la console 20, direction qui est située dans le plan médian (plan de symétrie) de la console et qui correspond également à la direction du lobe principal du diagramme de rayonnement de l'antenne directionnelle 34.

La droite D désigne la direction du drone, c'est-à-dire la droite qui réunit le centre du référentiel du drone 10 (position Pd) et le centre du référentiel de la console 20 (position Pc). Les coordonnées GPS du drone et de la console permettent de déterminer cette droite, et par conséquent l'angle β de cette droite D par rapport au nord N (valeur ici négative par rapport au sens trigonométrique).

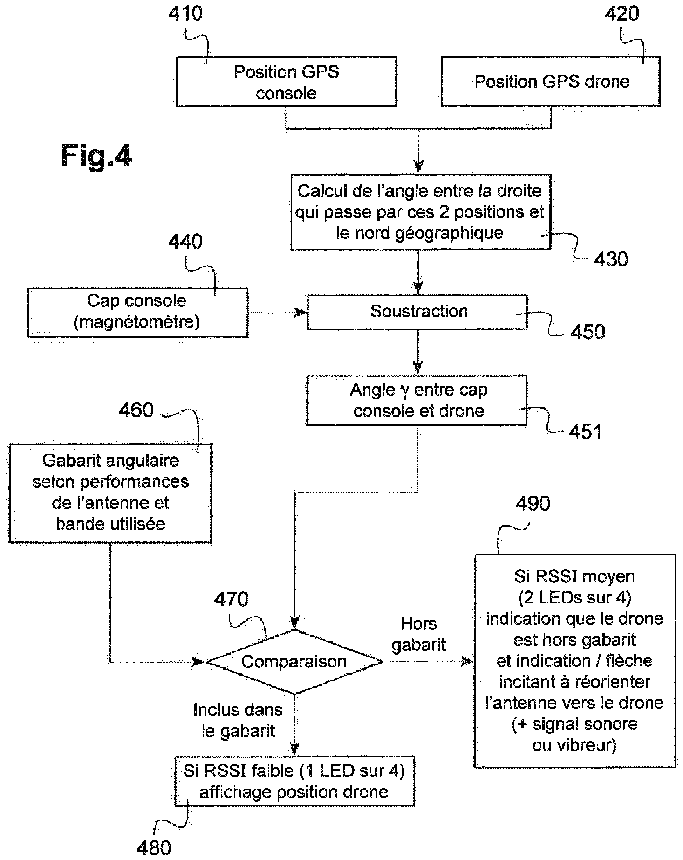

On comprend donc que la coordonnée angulaire du drone 10 par rapport à la console 20 est égale à la différence entre les valeurs algébriques de ces deux angles, soit γ = β - α (ici, une valeur absolue α + β compte tenu des signes opposés). La valeur de cet angle γ permet comme on va le voir de signaler au pilote les situations où le drone s'écarte angulairement de façon excessive par rapport au cap de la console CC, pour lui permettre d'effectuer l'action correctrice (réorientation de la console) qui s'impose. En référence maintenant à la Figure 4, on va décrire en détail un processus de traitement permettant de mettre en oeuvre cette fonctionnalité.

À l'étape 410, le module GPS 39 de la console 20 génère les coordonnées GPS de cette dernière. À l'étape 420, le module GPS 15 du drone génère les coordonnées GPS de ce dernier et les envoie à la console via la liaison sans fil. À l'étape 430, les moyens de traitement de la station au sol 16 (situés soit dans la console 20, soit dans la tablette 18) calculent l'angle β formé entre la droite D passant par le drone et la console par rapport au nord (ici le nord géographique).

À l'étape 440, le magnétomètre 38 de la console détermine l'angle α entre le cap de la console CC et le nord (ici le nord magnétique).

À l'étape 450, ces deux valeurs d'angle (valeurs orientées) sont soustraites l'une de l'autre, pour engendrer la coordonnée angulaire du drone 10 par rapport au cap de la console CC (étape 451). Avantageusement, on intègre dans cette opération la gestion du décalage entre le nord géographique et le nord magnétique (déclinaison magnétique).

Dans le cas où la liaison sans fil entre la console 20 et le drone 10 met en oeuvre des bandes de fréquences ou plus généralement des technologies qui font que la directivité de l'antenne est différente d'un mode à l'autre, alors l'étape 460 détermine, en fonction du mode de liaison couramment actif, un gabarit angulaire permettant de distinguer une situation où le drone est convenablement placé par rapport au cap de la console CC, et une situation où la position du drone est telle que la liaison sans fil est susceptible d'être de mauvaise qualité, voire perdue.

Par exemple, dans le cas d'une liaison *Wi-Fi* dans la bande des 2,4 GHz, le drone est considéré comme bien positionné s'il se trouve dans un secteur angulaire de ± 80° par rapport au cap de la console (secteur dénommé gabarit). Et dans le cas d'une liaison *Wi-Fi* dans la bande des 5,2 GHz, ce secteur angulaire n'est plus que de ± 30°. Dans le cas d'un signal reçu faible - par exemple correspondant à seulement deux LEDs indicatrices allumées (1 rouge et 1 blanche) -, l'angle d'ouverture de ce gabarit peut être restreint, par exemple à ± 40° ou ± 15° selon la bande utilisée.

À l'étape 470, les moyens de traitement comparent la valeur de γ générée à l'étape 450 avec le gabarit à utiliser pour la liaison sans fil active.

Dans le cas où cette valeur est incluse dans le gabarit, l'étape suivante 480 détermine la force (niveau) du signal reçu du drone 10, notée RSSI, et la compare à un seuil. Si la force du signal est inférieure à ce seuil, cela signifie par exemple que la distance entre le drone et la console est assez importante, et qu'il est par conséquent nécessaire que le drone se situe non seulement dans le gabarit, mais au plus près possible du cap de la console CC. Dans ce cas, la signalisation visuelle de la position mutuelle de la console et du drone, telle qu'on va la décrire plus loin, doit être activée, tandis que dans le cas contraire aucune signalisation visuelle n'est déclenchée.

Dans le cas où l'étape 470 démontre que la position angulaire γ du drone par rapport au cap de la console CC est en dehors du gabarit, alors le processus passe à l'étape 490. Dans cette étape, la force RSSI du signal de la liaison sans fil reçu du drone est également comparée à un seuil. De préférence, ce seuil est supérieur au seuil utilisé pour l'étape 480. Dans le cas où le signal est supérieur au seuil, aucune signalisation visuelle n'est déclenchée. En pratique, cela signifiera la plupart du temps que le défaut d'alignement du drone 10 par rapport à la console 20 est important, mais que le drone est suffisamment proche de la console pour que la qualité de la liaison sans fil entre le drone et la console reste satisfaisante. Au contraire, dans le cas où la force du signal est inférieure au seuil, alors une signalisation visuelle (détaillée dans la suite) est déclenchée. Cette signalisation inclut dans ce cas, outre une indication de la position du drone par rapport au cap de la console, des indications destinées faciliter la remise en alignement de la console avec le drone en amenant le pilote à tourner sur lui-même dans un certain sens, comme on va l'expliquer dans la suite. Le déclenchement d'une signalisation visuelle peut s'accompagner d'une signalisation sonore, d'une vibration, etc. de manière à attirer l'attention du pilote sur la nécessiter de corriger rapidement l'alignement de la console par rapport à la position du drone.

En référence à la Figure 5, on va maintenant décrire des exemples d'indications visuelles pouvant être mises en oeuvre dans la présente invention. Cette figure représente une image I prise par la caméra 14 embarquée sur le drone 10 et restituée dans les lunettes de réalité virtuelle 40.

La signalisation visuelle d'une situation "hors-gabarit" du drone comprend dans tous les cas un cercle C ayant un centre Ce qui représente pour le pilote sa propre position dans l'espace de navigation. La position angulaire (angle γ) du drone 10 par rapport au cap de la console CC est représentée à l'aide d'une icône ou pictogramme du drone, référencée Id, placée à l'endroit correspondant du cercle C. Avantageusement, cette signalisation comprend également une représentation du gabarit couramment actif, dans le cas où plusieurs gabarits correspondant à plusieurs modes de communication sans fil sont gérés par le système. Cette représentation est ici sous la forme d'un secteur circulaire G dont l'étendue angulaire est identique à celle du gabarit.

Dans une forme de réalisation, le secteur peut être coloré, avec une couleur qui peut varier en fonction de l'urgence de la correction nécessaire, qui elle-même peut être reflétée par la force du signal de communication sans fil reçu du drone 10.

Dans la représentation de la Figure 5, le drone se situe à environ 45° vers la droite par rapport au cap du drone, qui correspond à la bissectrice du gabarit G, et le gabarit G a une largeur de ± 30°.

Par ailleurs, dans le cas où le drone 10 se situe hors gabarit avec un niveau de signal insuffisant, comme détaillé ci-dessus en référence à l'étape 490, alors une signalisation visuelle supplémentaire est mise en oeuvre, par exemple sous forme d'une flèche directionnelle située le long d'un bord correspondant de l'écran. Dans l'exemple illustré, pour lequel il est nécessaire en cas de signal insuffisant de faire tourner la console vers la droite (dans le sens des aiguilles d'une montre sur la Figure 3), il s'agit d'une flèche F1 dirigée vers la droite et située le long du bord droit de l'écran. Cette flèche, qui indique au pilote de se tourner dans un sens ou dans l'autre, permet également de lui indiquer le minimum de déplacement/rotation pour s'orienter vers le drone.

D'autres flèches, F2, F3, F4 peuvent être sélectivement affichées en fonction du défaut d'alignement du drone par rapport à la console.

On observera ici que, selon le motif de directivité de l'antenne 34 de la console, on peut générer les défauts d'alignement en lacet seulement (par rotation de la console autour d'un axe vertical), ou à la fois en lacet et en tangage (par rotation non seulement autour d'un axe vertical mais également autour d'un axe horizontal perpendiculaire au cap CC de la console. Dans le premier cas, seules les flèches latérales F1 et F2 pourront être l'une ou l'autre affichées. Dans le second cas, ce sera l'une des flèches F1, F2, F3 et F4 qui sera affichée.

On notera à ce sujet que la gestion des défauts d'alignement en tangage est facilement mise en en oeuvre grâce au fait que le l'altitude est prise en charge par le système de coordonnées GPS, et grâce au fait que la référence dans ce cas, à savoir l'horizontale, est obtenue soit à l'aide du magnétomètre intégré à la console, soit à l'aide du gyroscope également intégré à celle-ci.

Bien entendu, la présente invention n'est nullement limitée aux formes de réalisation décrites et représentées, et l'homme du métier saura y apporter de nombreuses variantes et modifications. En particulier :
- elle s'applique à des drones de types variés : d'inspection, de loisirs ou autres, à vol stationnaire ou non, et à tous types de types de lunettes de réalité virtuelle ;
- les traitements de détection de la position du drone par rapport à la console et de génération des affichages dans l'image restituée peuvent être répartis de toute façon désirée entre la console 20, la tablette 18 et les lunettes de réalité virtuelle 40 dans le cas où ces dernières comportent des moyens de traitement, en particulier un processeur graphique ;
- les lunettes de réalité virtuelle peuvent comporter un système d'affichage dédié, ou un terminal intelligent du commerce tel qu'un *smartphone* rapporté sur les lunettes.

## Revendications

1. Un système de pilotage de drone en immersion comprenant un drone (10) doté de moyens de prise de vue (14) et une station au sol (16) communiquant avec le drone par une liaison sans fil,
la station au sol comprenant :
- une console (20) pourvue d'une antenne directionnelle (34) apte à être dirigée en direction du drone pour maintenir la qualité de la liaison sans fil,
- des lunettes de réalité virtuelle (40) restituant des images (I) prises à l'aide des moyens de prise de vue et transmises à partir du drone par la liaison sans fil, ainsi que des indications visuelles incluses dans les images restituées,
- des moyens de détermination d'une direction (D) du drone, et
- des moyens pour inclure dans les indications visuelles une indication liée à la direction (D) du drone,
le système étant **caractérisé en ce que** :
• les moyens de détermination d'une direction (D) du drone comprennent des moyens (15, 38, 39, 410-450) de détermination d'une coordonnée angulaire (γ) définie entre une direction de cap (CC) de la console et ladite direction (D) du drone,
• les moyens pour inclure dans les indications visuelles une indication sont des moyens sensibles auxdits moyens de détermination, et
• l'indication liée à la direction du drone est une indication de désalignement (C, Ce, G, Id) du drone par rapport à la direction de cap de la console, et est fonction de la coordonnée angulaire (γ) déterminée,
de façon à permettre à un utilisateur de la console d'effectuer une action correctrice de réorientation de la console dans le sens d'une réduction de ladite coordonnée angulaire (γ).

2. Le système de la revendication 1, dans lequel les moyens de détermination de position comprennent un magnétomètre (38) pour déterminer le cap de la console.

3. Le système de la revendication 1, dans lequel les moyens de détermination de position comprennent des modules de positionnement GPS (15, 39) prévus dans le drone (10) et dans la station au sol (16), et des moyens de traitement (430) pour déterminer une orientation du drone, correspondant à une droite (D) passant par le drone et par la console, par rapport à une direction (N) du nord.

4. Le système des revendications 2 ou 3, dans lequel les moyens de détermination de ladite coordonnée angulaire (γ) comprennent un moyen (450) de soustraction de l'angle (α) du cap (CC) de la console et de l'angle (β) correspondant à ladite orientation du drone (D).

5. Le système de la revendication 1, dans lequel les moyens de détermination de position comprennent un moyen (470) pour comparer la position angulaire du drone relativement à un cap (CC) de la console avec un gabarit angulaire (G) correspondant à un secteur angulaire, centré sur ledit cap, hors duquel ladite liaison sans fil est susceptible d'être de mauvaise qualité, ou perdue.

6. Le système de la revendication 5, dans lequel la liaison sans fil est apte à opérer dans un parmi au moins deux modes correspondant à des directivités différentes de l'antenne (34), et comprenant également des moyens de sélection d'un gabarit angulaire de bonne réception en fonction du mode actif de la liaison sans fil.

7. Le système de la revendication 5, comprenant en outre des moyens (480, 490) sensibles au niveau du signal de la liaison sans fil reçu du drone pour sélectivement inclure ou non ladite indication visuelle.

8. Le système de la revendication 7, dans lequel ladite indication visuelle est incluse dans le cas où la position angulaire du drone est comprise dans le gabarit angulaire mais le niveau du signal est inférieur à un seuil prédéterminé, et n'est pas incluse dans le cas où la position angulaire du drone n'est pas comprise dans le gabarit angulaire mais le niveau du signal est supérieur à un seuil prédéterminé.

9. Le système de la revendication 1, dans lequel ladite indication visuelle comprend une signalisation visuelle de la position relative de la console et du drone, avec un secteur de cercle (G) représentatif d'un gabarit angulaire de bonne réception, et un pictogramme (Id) dont la position est représentative de la position angulaire du drone par rapport au gabarit.

10. Le système de la revendication 1, dans lequel ladite indication visuelle comprend un ensemble de flèches directionnelles (F1-F4) pouvant être chacune sélectivement affichées pour indiquer un sens de déplacement souhaité pour la console afin d'amener le cap (CC) de la console vers la direction (D) du drone, lesdites flèches directionnelles comprenant des flèches vers la gauche et vers la droite (F2, F1) et/ou vers le haut et vers le bas (F3, F4).

## Patentansprüche

1. System zum Lenken einer Tauchdrohne, umfassend: eine Drohne (10), die mit Bildaufnahmemitteln (14) versehen ist, und eine Bodenstation (16), die mit der Drohne über eine drahtlose Verbindung kommuniziert,
wobei die Bodenstation Folgendes umfasst:
- eine Konsole (20), die mit einer direktionalen Antenne (34) versehen ist, die in der Lage ist, in Richtung der Drohne gerichtet zu werden, um die Qualität der drahtlosen Verbindung aufrechtzuerhalten,
- eine Virtuelle-Realitäts-Brille (40), die Bilder (I) wiedergibt, die mit Hilfe der Bildaufnahmemittel aufgenommen und von der Drohne aus über die drahtlose Verbindung übertragen wurden, sowie visuelle Angaben wiedergibt, die in den wiedergegebenen Bildern eingeschlossen sind,
- Mittel zum Bestimmen einer Richtung (D) der Drohne und
- Mittel zum Einschließen einer Angabe, die mit der Richtung (D) der Drohne verbunden ist, in den visuellen Angaben,
wobei das System **dadurch gekennzeichnet ist, dass**
• die Mittel zum Bestimmen einer Richtung (D) der Drohne Mittel (15, 38, 39, 410-450) zum Bestimmen einer Winkelkoordinate (γ) umfassen, die zwischen einer Kursrichtung (CC) der Konsole und der Richtung (D) der Drohne definiert ist,
• die Mittel zum Einschließen einer Angabe in den visuellen Angaben Mittel sind, die gegenüber den Bestimmungsmitteln empfindlich sind, und die Angabe, die mit der Richtung (D) der Drohne verbunden ist, eine Angabe über die Falschausrichtung (C, Ce, G, Id) der Drohne gegenüber der Kursrichtung der Konsole ist und von der bestimmten Winkelkoordinate (γ) abhängig ist,
in der Form, dass einem Benutzer der Konsole gestattet wird, eine Korrekturaktion zur Neuausrichtung der Konsole im Sinne einer Reduzierung der Winkelkoordinate (γ) vorzunehmen.

2. System nach Anspruch 1, wobei die Positionsbestimmungsmitte ein Magnetometer (38) umfassen, um den Kurs der Konsole zu bestimmen.

3. System nach Anspruch 1, wobei die Positionsbestimmungsmittel GPS-Positionsbestimmungsmodule (15, 39) umfassen, die in der Drohne (10) und in der Bodenstation (16) vorgesehen sind, und Verarbeitungsmittel (430) umfassen, um eine Ausrichtung der Drohne, die einer Geraden (D) entspricht, die durch die Drohne und durch die Konsole verläuft, gegenüber einer Nordrichtung (N) zu bestimmen.

4. System nach einem der Ansprüche 2 oder 3, wobei die Mittel zum Bestimmen der Winkelkoordinate (γ) ein Mittel (450) zum Subtrahieren des Winkels (α) des Kurses (CC) der Konsole und des Winkels (β), welcher der Ausrichtung der Drohne (D) entspricht, umfassen.

5. System nach Anspruch 1, wobei die Positionsbestimmungsmittel ein Mittel (470) umfassen, um die Winkelposition der Drohne relativ zu einem Kurs (CC) der Konsole mit einer Winkelschablone (G) zu vergleichen, die einem Winkelsektor entspricht, der auf den Kurs zentriert ist, außerhalb dessen die drahtlose Verbindung von schlechter Qualität sein oder verloren gehen kann.

6. System nach Anspruch 5, wobei die drahtlose Verbindung in der Lage ist, in einem aus zwei Modi betrieben zu werden, die unterschiedlichen Richtwirkungen der Antenne (34) entsprechen, und ferner Mittel zum Auswählen einer Winkelschablone mit gutem Empfang in Abhängigkeit von dem aktiven Modus der drahtlosen Verbindung umfasst.

7. System nach Anspruch 5, ferner umfassend Mittel (480, 490), die gegenüber einem Pegel des Signals der drahtlosen Verbindung, das aus der Drohne empfangen wird, empfindlich sind, um die visuelle Angabe wahlweise einzuschließen oder nicht.

8. System nach Anspruch 7, wobei die visuelle Angabe für den Fall eingeschlossen ist, dass die Winkelposition der Drohne in der Winkelschablone liegt, der Pegel des Signals jedoch niedriger als eine vorherbestimmte Schwelle ist, und die visuelle Angabe für den Fall nicht eingeschlossen ist, dass die Winkelposition der Drohne nicht in der Winkelschablone liegt, der Pegel des Signals jedoch höher als eine vorherbestimmte Schwelle ist.

9. System nach Anspruch 1, wobei die visuelle Angabe eine visuelle Anzeige der relativen Position der Konsole und der Drohne umfasst, mit einem Kreissektor (G), der für eine Winkelschablone mit gutem Empfang repräsentativ ist, und ein Piktogramm (Id) umfasst, dessen Position für die Winkelposition der Drohne gegenüber der Schablone repräsentativ ist.

10. System nach Anspruch 1, wobei die visuelle Angabe eine Anordnung von direktionalen Pfeilen (F1-F4) umfasst, die jeder wahlweise angezeigt werden können, um eine gewünschte Bewegungsrichtung für die Konsole anzugeben, um den Kurs (CC) der Konsole zu der Richtung (D) der Drohne hin einzustellen, wobei die direktionalen Pfeile Pfeile nach links und nach rechts (F2, F1) und/oder nach oben und nach unten (F3, F4) umfassen.

## Claims

1. A system for piloting a drone in immersion, comprising a drone (10) provided with imaging means (14) and a ground station (16) communicating with the drone through a wireless link,
the ground station comprising:
- a console (20) provided with a directional antenna (34) adapted to be directed towards the drone to maintain the quality of the wireless link,
- virtual reality glasses (40) rendering images (I) taken by means of the imaging means and transmitted from the drone through the wireless link, as well as visual indications included in the rendered images,
- means for determining a direction (D) of the drone, and
- means for including in the visual indications an indication related to the direction (D) of the drone,
the system being **characterized in that**:
• the means for determining a direction (D) of the drone comprise means (15, 38, 39, 410-450) for determining a defined angular coordinate (γ) between a heading direction (CC) of the console and said direction (D) of the drone,
• the means for including an indication in the visual indications are means sensitive to said determination means, and
• the indication related to the direction of the drone is an indication of misalignment (C, Ce, G, Id) of the drone with respect to the console heading, and is function of the determined angular coordinate (γ),
so as to allow a user of the console to perform a corrective action of reorientation of the console towards a reduction of said angular coordinate (γ).

2. The system of claim 1, wherein the position determination means comprise a magnetometer (38) to determine the console heading.

3. The system of claim 1, wherein the position determination means comprise GPS positioning modules (15, 39) provided in the drone (10) and in the ground station (16), and processing means (430) for determining an orientation of the drone, corresponding to a line (D) passing through the drone and the console, with respect to a direction (N) of the North.

4. The system of claims 2 or 3, wherein the means for determining said angular coordinate (γ) comprise a means (450) for subtracting the angle (α) of the console heading (CC) and the corresponding angle (β) of said drone orientation (D).

5. The system of claim 1, wherein the position determining means comprise a means (470) for comparing the angular position of the drone relative to a heading (CC) of the console with an angular template (G) corresponding to an angular sector, centred on said heading, outside of which said wireless link is liable to be of bad quality, or lost.

6. The system of claim 5, wherein the wireless link is adapted to operate in one of at least two modes corresponding to different directivities of the antenna (34), and also comprising means for selecting an angular template of good reception as a function of the active mode of the wireless link.

7. The system of claim 5, further comprising means (480, 490) sensitive to the level of the wireless link signal received from the drone to selectively include or not said visual indication.

8. The system of claim 7, wherein said visual indication is included in the case where the angular position of the drone is comprised in the angular template but the level of the signal is lower than a predetermined threshold, and is not included in the case where the angular position of the drone is not comprised in the angular template but the level of the signal is higher than a predetermined threshold.

9. The system of claim 1, wherein said visual indication comprises a visual signalling of the relative position of the console and of the drone, with a sector of a circle (G) representative of an angular template of good reception, and a pictogram (Id) whose position is representative of the angular position of the drone with respect to the template.

10. The system of claim 1, wherein said visual indication comprises a set of directional arrows (F1-F4) able to be each selectively displayed to indicate a desired direction of displacement for the console so as to bring the console heading (CC) towards the direction (D) of the drone, said directional arrows comprising arrows towards the left and towards the right (F2, F1) and/or towards the top and towards the bottom (F3, F4).
